# FASCICULE DE BREVET EUROPEEN

(11) **EP 3 209 484 B1**
(45) Date de publication et mention de la délivrance du brevet: **13.08.2025**
(21) Numéro de dépôt: 15798499.8
(22) Date de dépôt: 19.10.2015
(51) Int. Cl.: B29C 65/56, F01D 5/28, B29C 65/00, F04D 29/32, B23P 15/04, F04D 29/02, B29L 31/08, B29C 65/48, B29C 65/64, B29B 11/16

(54) **ASSEMBLAGE PAR UN ELEMENT D'ANCRAGE MECANIQUE ENTRE DEUX PIECES DONT L'UNE EST REALISEE EN MATERIAU COMPOSITE**
ANORDNUNG VON ZWEI TEILEN DURCH EIN ELEMENT ZUR MECHANISCHEN VERANKERUNG, VON DENEN EINES AUS VERBUNDWERKSTOFF GEFERTIGT IST
ASSEMBLY OF TWO PARTS BY A MECHANICAL ANCHORING ELEMENT, ONE OF WHICH IS MADE OF A COMPOSITE MATERIAL

(30) Priorité: 23.10.2014 FR 1460200
(43) Date de publication de la demande: 30.08.2017
(73) Titulaire: Safran Aircraft Engines, 75015 Paris (FR)
(72) Inventeur: SCHNEIDER, Julien, F-77550 Moissy-Cramayel Cedex (FR); FEUNTEUN, Johann, F-77550 Moissy-Cramayel Cedex (FR); GODON, Thierry, F-77550 Moissy-Cramayel Cedex (FR)
(74) Mandataire: Cabinet Beau de Loménie
(86) Numéro de dépôt international: PCT/FR2015/052797
(87) Numéro de publication internationale: WO 2016/062952

(56) Documents cités:
- EP-A2- 1 681 440
- WO-A1-2013/021141
- WO-A1-2013/021141
- FR-A1- 2 963 055
- FR-A1- 2 963 055
- US-A- 5 112 194
- US-A- 5 112 194
- US-B1- 6 431 837

## Description

### Arrière-plan de l'invention

L'invention se rapporte au domaine général de l'assemblage entre deux pièces d'une structure dans laquelle l'une des pièces est réalisée en matériau composite avec un renfort fibreux obtenu à partir d'une préforme fibreuse réalisée par tissage tridimensionnel et densifié par une matrice.

L'invention concerne l'assemblage entre un clinquant métallique et un bord d'attaque d'une aube de turboréacteur en matériau composite, et l'assemblage entre une coque et une âme structurale formant longeron de pale d'hélice de turbopropulseur en matériau composite.

Il est connu de réaliser une aube de turboréacteur en matériau composite à l'aide d'un renfort fibreux obtenu à partir d'une préforme fibreuse réalisée par tissage tridimensionnel et densifié par une matrice. Par rapport aux autres techniques connues de fabrication d'une aube en matériau composite, la réalisation d'une préforme fibreuse par tissage tridimensionnel présente de nombreux avantages comme notamment celui de ne pas avoir à recourir à des inserts ou tout autre élément rapporté. On pourra se référer au document EP 1,526,285 qui décrit un procédé de fabrication d'une telle aube de soufflante.

Par ailleurs, il est connu de munir le bord d'attaque d'une telle aube de turboréacteur en matériau composite d'un clinquant (ou renfort) métallique afin de protéger l'aubage composite de l'abrasion/érosion et lors de l'impact d'un corps étranger. Ceci est notamment le cas pour les aubes de soufflante d'un turboréacteur qui sont exposées à l'ingestion d'un oiseau, de grêle, de glace, etc.

Typiquement, le clinquant métallique, qui est réalisé par des procédés mécaniques tels que l'estampage, le formage ou l'électroformage par exemple, est collé sur le bord d'attaque de l'aube en matériau composite par l'intermédiaire d'un cordon de colle. Cette opération peut être réalisée dans un moule assurant le collage du clinquant métallique ou dans une étuve pour obtenir une réticulation du cordon de colle appliqué le cas échéant sur le clinquant.

Un tel assemblage du clinquant métallique sur le bord d'attaque d'une aube en matériau composite présente de nombreux inconvénients. En particulier, lorsque l'aube subit des déformations selon la direction de la corde ou de sa longueur, le flambage local de l'ensemble sollicite significativement le cordon de colle en traction et en arrachement, ce qui peut induire un décollement des ailes du clinquant métallique. Or, une fois ces ailes décollées, l'inertie du clinquant métallique sous l'effet de la force centrifuge l'éjecte vers l'extérieur.

Un renforcement local du clinquant peut alors être une solution pour limiter la propagation du décollement mais les solutions envisagées, telle que le perçage et l'usinage de la pale et du clinquant pour y faire traverser un lien mécanique, génère une opération supplémentaire et endommage localement la pale. De plus, les zones de position du clinquant doivent assurer un niveau élevé d'aérodynamisme qui impose que le moyen d'assemblage du clinquant épouse le plus parfaitement possible la forme du clinquant. Or, avec des aubes de soufflante ayant des formes de plus en plus complexes, cette contrainte devient difficile à respecter avec les solutions d'assemblage de l'art antérieur.

Le document US 6,431,837 divulgue une aube de soufflante composite cousue. Le document FR 2963055 divulgue une aube de rotor en matériau composite comprenant une chape de liaison. EP 1 681 440 divulgue une aube en matériau composite.

### Objet et résumé de l'invention

Il existe donc un besoin de pouvoir disposer d'un assemblage qui ne présente pas les inconvénients précités.

Conformément à l'invention, ce but est atteint grâce à un assemblage selon la revendication 1.

L'invention est remarquable en ce que l'élément d'ancrage mécanique qui vient s'insérer à l'intérieur de la pièce en matériau composite permet d'augmenter significativement la surface de collage entre les deux pièces. De la sorte, l'assemblage entre les deux pièces peut être considérablement renforcé. En particulier, dans le cas d'un assemblage entre un clinquant métallique et le bord d'attaque d'une aube en matériau composite, il est possible d'adapter la position de l'élément d'ancrage mécanique en fonction des niveaux de sollicitations en cisaillement de l'aube. Enfin, cet assemblage est remarquable en ce qu'il ne nécessite pas de perçage de la pièce en matériau composite, l'élément d'ancrage mécanique étant simplement inséré entre les fibres de la pièce en matériau composite. Toute dégradation de la pièce en matériau composite peut ainsi être évitée.

L'élément d'ancrage mécanique vient s'insérer au niveau d'une zone de déliaison ménagée lors du tissage de la préforme fibreuse pour la réalisation du renfort fibreux de la pièce en matériau composite.

En outre, l'élément d'ancrage mécanique vient s'insérer au niveau de la zone de déliaison de la préforme fibreuse préalablement à une étape d'injection de ladite préforme fibreuse par une résine. En d'autres termes, l'ancrage mécanique s'effectue sur une préforme fibreuse (de la pièce en matériau composite) qui est non injectée, la préforme et l'autre pièce étant ensuite placées dans un moule d'injection pour y subir une co-injection de résine.

Selon un mode de réalisation, la pièce en matériau composite est une pale d'aube de turboréacteur et l'autre pièce est un clinquant métallique venant s'assembler sur un bord d'attaque de ladite pale.

Dans ce mode de réalisation, l'élément d'ancrage mécanique peut comprendre plusieurs tiges métalliques dont certaines sont solidaires des ailes du clinquant et dont l'une est solidaire de la partie centrale du clinquant, l'ensemble de ces tiges s'étendant selon une direction transversale à la pale à l'intérieur de celle-ci.

Alternativement, l'élément d'ancrage mécanique peut comprendre au moins une poutre qui s'étend entre deux ailes du clinquant métallique et qui traverse de part en part la pale dans le sens de l'épaisseur de celle-ci.

Selon un autre mode de réalisation, la pièce en matériau composite est une âme structurale de pale d'hélice de turbopropulseur formant longeron et l'autre pièce est une coque venant se positionner autour de l'âme de la pale d'hélice, ladite coque étant réalisée en matériau composite.

Dans ce mode de réalisation, l'élément d'ancrage mécanique peut comprendre au moins un ergot solidaire d'une face intérieure de la coque et venant s'insérer à l'intérieur de l'âme de la pale d'hélice.

L'invention a également pour objet une pale d'aube de turboréacteur, une pale d'hélice de turbopropulseur et une turbomachine comprenant au moins un assemblage tel que défini précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1 et 2 sont des vues d'un assemblage entre un clinquant métallique et une aube en matériau composite hors invention, respectivement en perspective et en coupe transversale ;
- la figure 3 est une vue schématique montrant un exemple de zone de déliaison pour permettre le passage de l'élément d'ancrage des figures 1 et 2 ;
- la figure 4 est une vue en coupe transversale d'un assemblage entre un clinquant métallique et une aube en matériau composite selon un mode de réalisation de l'invention ;
- la figure 5 est une vue en coupe transversale d'un assemblage entre un clinquant métallique et une aube en matériau composite selon un autre mode de réalisation de l'invention ; et
- la figure 6 est une vue en coupe longitudinale d'un assemblage entre une âme structurale de pale d'hélice de turbopropulseur et une coque selon encore un autre mode de réalisation de l'invention.

### Description détaillée de l'invention

L'invention s'applique à tout assemblage selon la revendication 1 entre deux pièces d'une structure dans laquelle l'une des deux pièces est fabriquée en matériau composite avec un renfort fibreux obtenu à partir d'une préforme fibreuse réalisée par tissage tridimensionnel et densifié par une matrice (l'autre pièce étant par exemple métallique ou réalisée dans un matériau composite différent de celui utilisé pour la pièce à préforme fibreuse réalisée par tissage tridimensionnel).

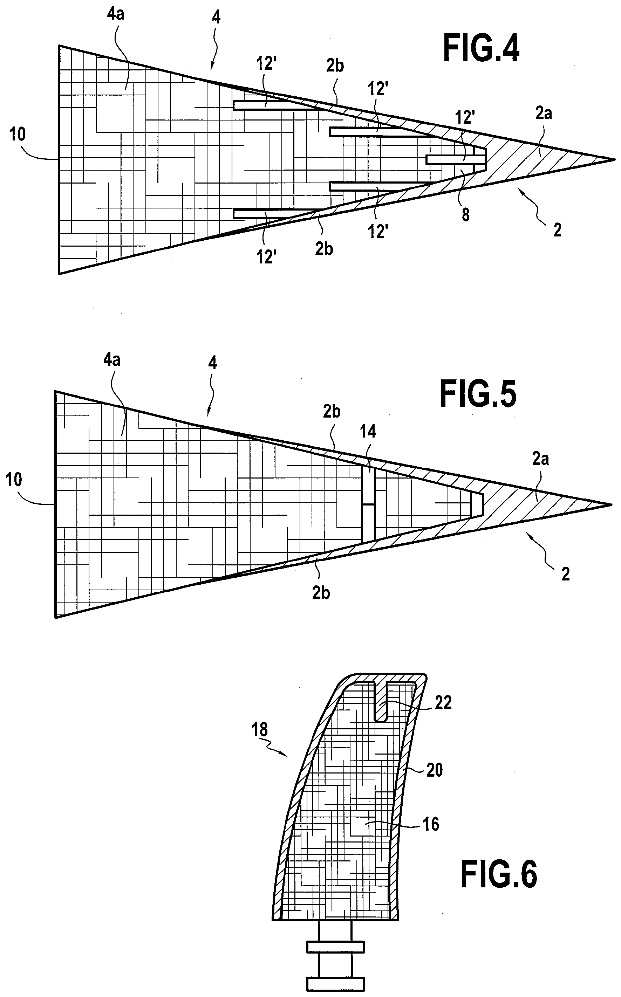

Comme représenté sur les figures 4 et 5, l'invention s'applique notamment à l'assemblage entre un clinquant métallique 2 et une aube 4 en matériau composite de moteur à turbine à gaz.

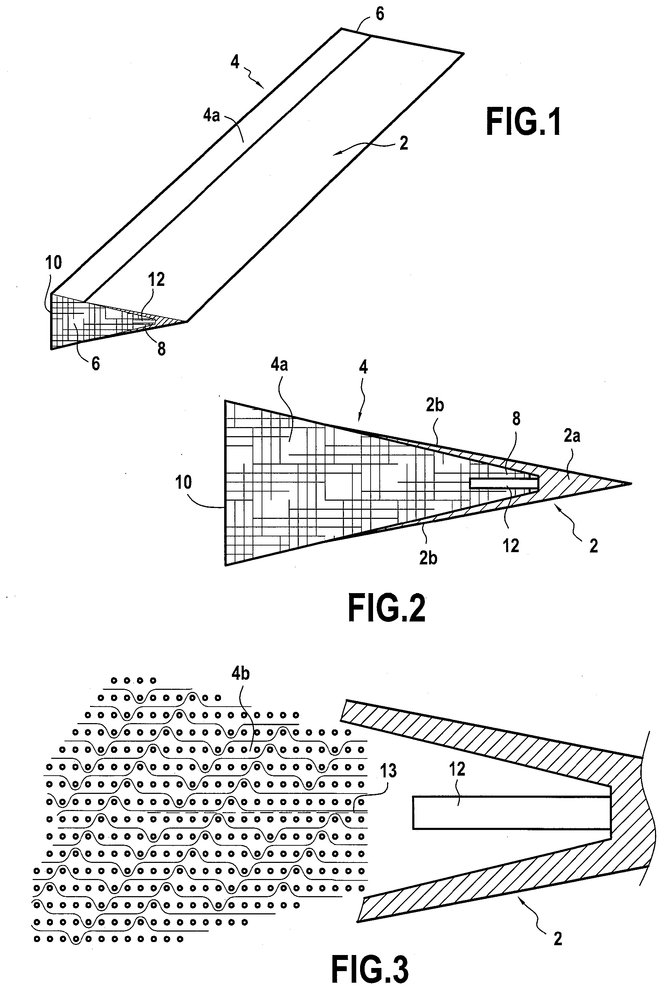

L'aube 4 comprend une pale 4a qui est réalisée en matériau composite avec un renfort fibreux obtenu à partir d'une préforme fibreuse réalisée par tissage tridimensionnel et densifié par une matrice. Un exemple de trame de tissage tridimensionnel d'une préforme fibreuse 4b pour la réalisation d'une telle pale d'aube est représenté sur la figure 3.

On pourra se référer au document EP 1,526,285 qui décrit un exemple de réalisation d'une telle préforme fibreuse par tissage tridimensionnel. Après mise en forme, la préforme fibreuse ainsi réalisée est mise en place dans un moule d'injection. Le dépôt de la matrice dans la préforme fibreuse est réalisée en maintenant la préforme dans le moule au moins jusqu'à rigidification (ou consolidation) de la préforme.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou par un processus de type RTM ("Resin Transfer Moulding"). Dans le cas d'une matrice en carbone ou en céramique, la densification pourra être réalisée par infiltration chimique en phase gazeuse, ou CVI ("Chemical Vapor Infiltration") ou par imprégnation par une composition liquide contenant une résine précurseur de carbone ou de céramique et traitement thermique de pyrolyse ou céramisation du précurseur, ces procédés étant bien connus en soi.

De façon connue en soi, la pale 4a de l'aube s'étend longitudinalement entre deux extrémités longitudinales 6 et latéralement entre un bord d'attaque 8 et un bord de fuite 10.

Le clinquant métallique 2, qui a notamment pour fonction de protéger l'aubage composite de la pale 4a de l'abrasion/érosion et lors de l'impact d'un corps étranger, est assemblé sur le bord d'attaque 8 de la pale de l'aube au moyen d'un élément d'ancrage mécanique.

Dans les figures 1 à 3, l'élément d'ancrage mécanique comprend une ou plusieurs tiges métalliques 12 qui sont solidaires du clinquant métallique 2 et qui s'étendent selon une direction transversale à la pale 4a à l'intérieur de celle-ci (c'est-à-dire depuis le bord d'attaque 8 vers le bord de fuite 10 de la pale).

De façon plus précise, comme représenté sur la figure 3, chaque tige métallique 12 vient de préférence s'insérer au niveau d'une zone de déliaison 13 qui est ménagée lors du tissage de la préforme fibreuse 4b pour la réalisation du renfort fibreux de la pale. Une telle zone de déliaison 13 est typiquement obtenue en omettant localement de lier entre elles des couches de fils adjacentes et permettent ainsi d'obtenir deux portions de préforme qui sont déliées entre elles de façon à pouvoir insérer une tige métallique 12 pour l'ancrage mécanique du clinquant métallique 2 sur l'aube.

Avantageusement, la tige métallique 12 est placée dans la zone de déliaison 14 de la préforme fibreuse 4b préalablement à l'étape d'injection de ladite préforme fibreuse par une résine (c'est-à-dire préalablement au placement de la préforme dans le moule d'injection de sorte que la préforme fibreuse 4b et la tige métallique 12 subissent une co-injection de résine).

Comme indiqué précédemment, l'élément d'ancrage mécanique peut comprendre une ou plusieurs tiges métalliques 12 qui sont solidaires du clinquant métallique 2. Par exemple, plusieurs tiges métalliques peuvent être positionnées à différentes hauteurs de la pale 4a de l'aube.

De même, comme représenté sur les figures 2 et 3, ces tiges métalliques 12 peuvent être solidaires d'une partie centrale 2a du clinquant métallique 2 reliant entre elles les ailes 2b dudit clinquant (destinées à venir se positionner contre une face latérale de la pale).

Dans une variante illustrée par la figure 4, l'élément d'ancrage mécanique du clinquant métallique 2 sur le bord d'attaque 8 de la pale 4a de l'aube comprend plusieurs tiges métalliques 12' dont certaines sont solidaires des ailes 2b du clinquant et dont l'une est solidaire de la partie centrale 2a du clinquant, l'ensemble de ces tiges 12' s'étendant selon une direction transversale à la pale 4a à l'intérieur de celle-ci.

Dans une autre variante illustrée par la figure 5, l'élément d'ancrage mécanique du clinquant métallique 2 sur le bord d'attaque 8 de la pale 4a de l'aube comprend au moins une poutre 16 qui s'étend entre les deux ailes 2a du clinquant métallique 2 et qui traverse de part en part la pale 4a dans le sens de son épaisseur.

Bien entendu, les éléments d'ancrage mécanique peuvent présenter d'autres formes que celles décrites ci-dessus, notamment des formes profilées qui permettent d'augmenter la surface d'adhésion entre les deux pièces à assembler.

La figure 6 représente un autre mode de réalisation de l'invention dans lequel l'assemblage est réalisé entre une âme structurale 16 formant longeron de pale d'hélice 18 de turbopropulseur qui est réalisée en matériau composite et une coque 20 venant se positionner autour de l'âme de la pale d'hélice, ladite coque étant par exemple réalisée en matériau composite.

Dans cet autre mode de réalisation, l'âme structurale 16 formant longeron de la pale d'hélice 18 est réalisée en matériau composite avec un renfort fibreux obtenu à partir d'une préforme fibreuse réalisée par tissage tridimensionnel et densifié par une matrice.

Par ailleurs, l'élément d'ancrage mécanique de la coque 20 sur l'âme structurale 16 de la pale d'hélice comprend ici au moins un ergot 22 qui est solidaire d'une face intérieure de la coque et qui vient s'insérer à l'intérieur de l'âme de la pale d'hélice. Par exemple, cet ergot 22 peut venir s'insérer au niveau d'une zone de déliaison ménagée lors du tissage de la préforme fibreuse pour la réalisation du renfort fibreux de l'âme structurale 16 préalablement à l'étape d'injection de ladite préforme fibreuse par une résine. Bien entendu, cet ergot pourrait à l'inverse être solidaire de l'âme de la pale d'hélice et venir s'insérer à l'intérieur de la coque réalisée en matériau composite.

Par ailleurs, quelque soit le mode de réalisation, il est à noter que l'assemblage entre les deux pièces est de préférence réalisé avec la pièce en matériau composite qui est à l'état de préforme fibreuse non injectée, de sorte que l'étape d'injection de la préforme permet d'assurer un collage entre les pièces. Alternativement, les deux pièces pourraient être réalisées séparément l'une de l'autre, puis assemblées par l'intermédiaire de l'élément d'ancrage mécanique et enfin collées entre elles au cours d'une autre opération.

## Revendications

1. Assemblage entre deux pièces (2, 4 ; 16, 20), l'une des pièces (4 ; 16) étant réalisée en matériau composite avec un renfort fibreux obtenu à partir d'une préforme fibreuse réalisée par tissage tridimensionnel et densifié par une matrice, l'assemblage comprenant un élément d'ancrage mécanique (12 ; 12' ; 14 ; 22) solidaire de l'une des pièces et venant s'insérer à l'intérieur de l'autre pièce, l'élément d'ancrage mécanique venant s'insérer au niveau d'une zone de déliaison (13) ménagée lors du tissage de la préforme fibreuse (4b) pour la réalisation du renfort fibreux de la pièce en matériau composite préalablement à une étape d'injection de ladite préforme fibreuse par une résine, dans lequel:
(i) la pièce en matériau composite étant une pale (4a) d'aube (4) de turboréacteur et l'autre pièce étant un clinquant métallique (2) venant s'assembler sur un bord d'attaque (8) de ladite pale, dans lequel
(a) l'élément d'ancrage mécanique comprend plusieurs tiges métalliques dont certaines sont solidaires des ailes (2b) du clinquant et dont l'une est solidaire de la partie centrale (2a) du clinquant, l'ensemble de ces tiges s'étendant selon une direction transversale à la pale à l'intérieur de celle-ci, ou
(b) l'élément d'ancrage mécanique comprend au moins une poutre (14) qui s'étend entre deux ailes (2b) du clinquant métallique (2) et qui traverse de part en part la pale dans le sens de l'épaisseur de celle-ci ; ou
(ii) la pièce en matériau composite étant une âme structurale (16) de pale (18) d'hélice de turbopropulseur formant longeron et l'autre pièce étant une coque (20) venant se positionner autour de l'âme de la pale d'hélice, ladite coque étant réalisée en matériau composite.

2. Assemblage selon la revendication 1, dans lequel la pièce en matériau composite est une pale (4a) d'aube (4) de turboréacteur et l'autre pièce est un clinquant métallique (2) venant s'assembler sur un bord d'attaque (8) de ladite pale et dans lequel l'élément d'ancrage mécanique comprend plusieurs tiges métalliques (12') dont certaines sont solidaires des ailes (2b) du clinquant et dont l'une est solidaire de la partie centrale (2a) du clinquant, l'ensemble de ces tiges s'étendant selon une direction transversale à la pale à l'intérieur de celle-ci.

3. Assemblage selon la revendication 1, dans lequel la pièce en matériau composite est une pale (4a) d'aube (4) de turboréacteur et l'autre pièce est un clinquant métallique (2) venant s'assembler sur un bord d'attaque (8) de ladite pale et dans lequel l'élément d'ancrage mécanique comprend au moins une poutre (14) qui s'étend entre deux ailes (2b) du clinquant métallique (2) et qui traverse de part en part la pale dans le sens de l'épaisseur de celle-ci.

4. Assemblage selon la revendication 1, dans lequel la pièce en matériau composite est une âme structurale (16) de pale (18) d'hélice de turbopropulseur formant longeron et l'autre pièce est une coque (20) venant se positionner autour de l'âme de la pale d'hélice, ladite coque étant réalisée en matériau composite, et dans lequel l'élément d'ancrage mécanique comprend au moins un ergot (22) solidaire d'une face intérieure de la coque (20) et venant s'insérer à l'intérieur de l'âme structurale (16) de la pale d'hélice.

5. Pale (4a) d'aube (4) de turboréacteur comprenant un assemblage selon l'une quelconque des revendications 1 à 3, dans lequel la pièce en matériau composite est une pale (4a) d'aube (4) de turboréacteur et l'autre pièce est un clinquant métallique (2) venant s'assembler sur un bord d'attaque (8) de ladite pale.

6. Pale (18) d'hélice de turbopropulseur comprenant un assemblage selon l'une des revendications 1 ou 4, dans lequel la pièce en matériau composite est une âme structurale (16) de pale (18) d'hélice de turbopropulseur formant longeron et l'autre pièce est une coque (20) venant se positionner autour de l'âme de la pale d'hélice, ladite coque étant réalisée en matériau composite.

7. Turbomachine comprenant au moins un assemblage selon l'une quelconque des revendications 1 à 4.

## Patentansprüche

1. Verbindung zwischen zwei Teilen (2, 4; 16, 20), wobei eines der Teile (4; 16) aus einem Verbundmaterial mit einer Faserverstärkung hergestellt ist, die anhand eines Faservorformlings erlangt wird, der durch dreidimensionales Weben hergestellt und durch eine Matrize verdichtet wird, die Verbindung umfassend ein mechanisches Verankerungselement (12; 12'; 14; 22), das fest mit einem der Teile verbunden ist und sich in das Innere des anderen Teils einfügt, wobei sich das mechanische Verankerungselement sich auf Höhe eines Trennungsbereichs (13) einfügt, der beim Weben des Faservorformlings (4b) für die Herstellung der Faserverstärkung des Teils aus Verbundmaterial vor einem Schritt eines Injizierens des Faservorformlings durch ein Harz ausgespart wird, wobei:
(i) wobei das Teil aus Verbundmaterial eine Blatt (4a) einer Schaufel (4) eines Turbotriebwerks ist und das andere Teil eine Metallfolie (2) ist, die an einer Vorderkante (8) des Blatts verbunden wird, wobei
(a) das mechanische Verankerungselement mehrere Metallstäbe umfasst, wovon denen einige fest mit den Flügeln (2b) der Folie verbunden sind und wovon denen einer fest mit dem mittleren Abschnitt (2a) der Folie verbunden ist, wobei sich alle diese Stäbe in einer Richtung quer zu dem Blatt in dessen Innerem erstrecken, oder
(b) das mechanische Verankerungselement mindestens einen Träger (14) umfasst, der sich zwischen zwei Flügeln (2b) der Metallfolie (2) erstreckt und das Blatt in Richtung der Stärke davon durchquert; oder
(ii) wobei das Teil aus Verbundmaterial ein struktureller Kern (16) eines Propellerblatts (18) eines Turbotriebwerks ist, der einen Längsträger bildet, und das andere Teil eine Schale (20) ist, die um den Kern des Propellerblatts herum positioniert ist, wobei die Schale aus Verbundmaterial hergestellt ist.

2. Verbindung nach Anspruch 1, wobei das Teil aus Verbundwerkstoff ein Blatt (4a) einer Schaufel (4) eines Turbotriebwerks ist und das andere Teil eine Metallfolie (2) ist, die an einer Vorderkante (8) des Blatts verbunden wird, und wobei das mechanische Verankerungselement mehrere Metallstäbe (12') umfasst, wovon einige fest mit den Flügeln (2b) der Folie verbunden sind und wovon einer fest mit dem mittleren Abschnitt (2a) der Folie verbunden ist, wobei sich die Gesamtheit dieser Stäbe in einer Richtung quer zu dem Blatt in dessen Innerem erstreckt.

3. Verbindung nach Anspruch 1, wobei das Teil aus Verbundwerkstoff ein Blatt (4a) einer Schaufel (4) eines Turbotriebwerks ist und das andere Teil eine Metallfolie (2) ist, die an einer Vorderkante (8) des Blatts verbunden wird, und wobei das mechanische Verankerungselement mindestens einen Träger (14) umfasst, der sich zwischen zwei Flügeln (2b) der Metallfolie (2) erstreckt und das Blatt in Richtung der Stärke davon durchquert.

4. Verbindung nach Anspruch 1, wobei das Teil aus Verbundmaterial ein struktureller Kern (16) eines Propellerblatts (18) eines Turbotriebwerks ist, der einen Längsträger bildet, und das andere Teil eine Schale (20) ist, die um den Kern des Propellerblatts herum positioniert ist, wobei die Schale aus Verbundmaterial hergestellt ist, und wobei das mechanische Verankerungselement mindestens einen Stift (22) umfasst, der fest mit einer Innenseite der Schale (20) verbunden ist und in das Innere des strukturellen Kerns (16) des Propellerblatts eingefügt wird.

5. Blatt (4a) einer Schaufel (4), eines Turbotriebwerks, umfassend eine Verbindung nach einem der Ansprüche 1 bis 3, wobei das Teil aus Verbundwerkstoff ein Blatt (4a) einer Schaufel (4) eines Turbotriebwerks ist und das andere Teil eine Metallfolie (2) ist, die an einer Vorderkante (8) des Blatts verbunden wird.

6. Propellerblatt (18) eines Turbotriebwerks, umfassend eine Verbindung nach einem der Ansprüche 1 oder 4, wobei das Teil aus Verbundmaterial ein struktureller Kern (16) eines Propellerblatts (18) eines Turbotriebwerks ist, der einen Längsträger bildet, und das andere Teil eine Schale (20) ist, die um den Kern des Propellerblatts herum positioniert ist, wobei die Schale aus Verbundmaterial hergestellt ist.

7. Turbomaschine, umfassend mindestens eine Verbindung nach einem der Ansprüche 1 bis 4.

## Claims

1. An assembly of two parts (2, 4; 16, 20), one of the parts (4; 16) being made of composite material with fiber reinforcement obtained from a fiber preform made by three-dimensional weaving and densified with a matrix, the assembly including a mechanical anchor element (12; 12'; 14; 22) secured to one of the parts and inserted inside the other part, the mechanical anchor element being inserted in a zone (13) of non-interlinking provided during weaving of the fiber preform (4b) that is to make the fiber reinforcement of the composite material part, with the insertion taking place before a step of injecting a resin into said fiber preform, wherein:
(i) the composite material part is an airfoil (4a) of a turbojet blade (4) and the other part is a metal strip (2) for assembling on a leading edge (8) of said airfoil, wherein
(a) the mechanical anchor element comprises a plurality of metal rods some of which are secured to the flanges (2b) of the strip and one of which is secured to the central portion (2a) of the strip, all of these rods extending in a direction that is transverse relative to the airfoil into the inside of the airfoil, or
(b) the mechanical anchor element comprises at least one crossbar (14) that extends between two flanges (2b) of the metal strip (2) and that passes through the airfoil in its thickness direction; or
(ii) the composite material part being a spar-forming structural core (16) of a turboprop propeller blade (18) and the other part being a shell (20) that is positioned around the propeller blade core, said shell being made of composite material.

2. An assembly according to claim 1, wherein the composite material part is an airfoil (4a) of a turbojet blade (4) and the other part is a metal strip (2) for assembling on a leading edge (8) of said airfoil and wherein the mechanical anchor element comprises a plurality of metal rods (12') some of which are secured to the flanges (2b) of the strip and one of which is secured to the central portion (2a) of the strip, all of these rods extending in a direction that is transverse relative to the airfoil into the inside of the airfoil.

3. An assembly according to claim 1, wherein the composite material part is an airfoil (4a) of a turbojet blade (4) and the other part is a metal strip (2) for assembling on a leading edge (8) of said airfoil and wherein the mechanical anchor element comprises at least one crossbar (14) that extends between two flanges (2b) of the metal strip (2) and that passes through the airfoil in its thickness direction.

4. An assembly according to claim 1, wherein the composite material part being a spar-forming structural core (16) of a turboprop propeller blade (18) and the other part being a shell (20) that is positioned around the propeller blade core, said shell being made of composite material, and wherein the mechanical anchor element comprises at least one lug (22) secured to an inside face of the shell (20) and inserted into the inside of the structural core (16) of the propeller blade.

5. An airfoil (4a) of a turbojet blade (4) comprising an assembly according to any one of claims 1 to 3, wherein the composite material part is an airfoil (4a) of a turbojet blade (4) and the other part is a metal strip (2) for assembling on a leading edge (8) of said airfoil.

6. A turboprop propeller blade (18) comprising an assembly according to any one of claims 1 to 4, wherein the composite material part is a spar-forming structural core (16) of a turboprop propeller blade (18) and the other part being a shell (20) that is positioned around the propeller blade core, said shell being made of composite material.

7. A turbine engine including at least one assembly according to any one of claims 1 to 4.
